# EUROPÄISCHE PATENTSCHRIFT

(11) **EP 2 626 545 B1**
(45) Veröffentlichungstag und Bekanntmachung des Hinweises auf die Patenterteilung: **29.10.2014**
(21) Anmeldenummer: 13450006.5
(22) Anmeldetag: 29.01.2013
(51) Int. Cl.: B23P 19/04, F16L 19/02, F02M 47/02, F02M 61/16, F02M 55/00, F16L 15/00

(54) **Verfahren zur Beeinflussung der Gewindegeometrie eines Innengewindes für Brennkraftmaschinen**
Method for influencing the thread geometry of an internal thread for internal combustion engines
Procédé destiné à influencer la géométrie de filetage d'un filetage intérieur pour les moteurs à combustion

(30) Priorität: 07.02.2012 AT 1622012
(43) Veröffentlichungstag der Anmeldung: 14.08.2013
(73) Patentinhaber: Robert Bosch GmbH, 70469 Stuttgart-Feuerbach (DE)
(72) Erfinder: Nussbaumer, Gernot, 4624 Pennewang (AT)

(56) Entgegenhaltungen:
- EP-A1- 2 336 548
- WO-A1-2011/092040
- AT-A4- 509 877
- GB-A- 2 436 931

## Beschreibung

Die Erfindung betrifft ein Verfahren zur Beeinflussung der Gewindegeometrie eines Innengewindes einer für das Führen von Hochdruckmedium vorgesehenen ersten Komponente einer Einspritzvorrichtung für Brennkraftmaschinen, wobei das Innengewinde an einem rohrförmigen Endabschnitt der ersten Komponente ausgebildet ist, in welches eine zweite Komponente einschraubbar und gegen eine Auflagefläche der ersten Komponente spannbar ist.

Die Erfindung betrifft weiters eine Gewindeverbindung von Hochdruckmedium führenden Komponenten einer Einspritzvorrichtung für Brennkraftmaschinen, wobei eine erste Komponente an einem rohrförmigen Endabschnitt ein Innengewinde und eine zweite Komponente ein in das Innengewinde einschraubbares Außengewinde aufweist, wobei die zweite Komponente bei Festziehen der Gewindeverbindung mit einer Stirnfläche gegen eine Auflagefläche der ersten Komponente spannbar ist.

Große Speichervolumen sind bei Common Rail Systemen für Großdieselmotoren aus hydraulischen Gründen notwendig. Daraus ergeben sich - auch aus Fertigungsgründen - große Dichtdurchmesser zum Abdichten der hochdruckbelasteten Bauteile. Hinsichtlich der Gewindebelastung sind diese großen Dichtdurchmesser bei Verschraubungen nachteilig. Einerseits müssen hohe Vorspannkräfte eingesetzt werden und andererseits ist die dynamische Belastung auf das Gewinde durch die pulsierende Innendruckbelastung erhöht.

Eine Entlastung des Gewindes kann derzeit praktikabel und effektiv nur über die Erhöhung des Gewindegrundradius - zur Reduzierung der Kerbwirkung - und durch eine Vergrößerung des Gewindedurchmessers - bei der die Kraftübertragungsfläche erhöht wird - erreicht werden. Weiters kann durch verbesserte Werkstoffqualität, Erhöhung der Gewindesteigung, insbesondere bei hoch vergüteten Schraubenverbindungen, Wärmebehandlungstechniken, Gewindefertigung (schlussvergütet - schlussgewalzt) und über den Schmierungszustand eine positive Beeinflussung der Belastbarkeit der Verschraubung erzielt werden. Geometrisch kann der Einsatz von Zugmuttern sowie von Gewinden mit Flankenwinkeldifferenzen und große Einschraubtiefen für die Dauerfestigkeit hilfreich sein.

Eine Gewindeverbindung der eingangs genannten Art ist beispielsweise dem Dokument AT 509 877 A4 zu entnehmen.

Alle genannten, einsatzfähigen Maßnahmen sind jedoch in ihrer Wirkung beschränkt, insbesondere wenn hohe Vorspannkräfte benötigt werden.

Die Erfindung zielt daher darauf ab, die Dauerfestigkeit der Gewindeverbindung von Hochdruckmedium führenden Komponenten einer Einspritzvorrichtung für Brennkraftmaschinen auf einfache Weise zu verbessern.

Zur Lösung dieser Aufgabe sieht die Erfindung bei einem Verfahren der eingangs genannten Art vor, dass der rohrförmige Endabschnitt an der Außenseite mit einer eine plastische Verformung erlaubenden radialen Druckkraft beaufschlagt wird, wodurch der rohrförmige Endabschnitt derart umgeformt wird, dass das Innengewinde einen sich in Richtung zum freien Ende hin kontinuierlich verringernden Innendurchmesser erhält.

Zur Lösung dieser Aufgabe sieht die Erfindung weiters bei einer Gewindeverbindung der eingangs genannten Art vor, dass die erste Komponente durch Druckumformung derart bearbeitet ist, dass das Innengewinde einen sich in Richtung zum freien Ende hin kontinuierlich verringernden Innendurchmesser aufweist.

Die Erfindung betrifft somit eine mittels Vorprägung vorgespannte und vorverformte Gewindegeometrie, was zu einer wesentliche Spannungsreduktion und Änderung der Spannungsverteilung zwischen den Gewindegängen führt. Die Gewindebelastung wird reduziert, indem eine gezielte plastische Deformation des Innengewindes durch Vorprägung mit einer hohen Druckkraft an der Außenseite des rohrförmigen Endabschnitts erfolgt. Dadurch können einerseits Eigenspannungen im Gewindegrund eingebracht werden und andererseits erfolgt eine plastische Deformation, die zu einer Gewindesteigungsdifferenz zwischen den einzelnen Gewindegängen im Innengewinde führt. Diese Effekte erhöhen die Belastbarkeit des Gewindes und verändern zusätzlich die Krafteinleitung im Gewinde. Beides kann sich sehr positiv auf die Belastbarkeit des Gewindes auswirken.

Die Gewindesteigungsdifferenz kommt hierbei dadurch zustande, dass die axiale Erstreckung des Innengewindes sich durch das Einwärtsverformen bei gleichbleibender Anzahl an Gewindegängen verringert. Das Innengewinde erhält somit eine geringere Gewindesteigung als das Außengewinde.

Die Gewindesteigungsdifferenz führt zu einer Homogenisierung der Kraftverteilung im Innengewinde. Bei herkömmlichen Gewindeverbindungen ist die Verteilung der Schraubenkraft auf die einzelnen Innengewindegänge sehr ungleichmäßig. Der erste tragende Gewindegang der Verbindung wird am höchsten belastet. Durch die Homogenisierung der Kraftverteilung wird die kritische höchstbelastete Stelle entlastet und gleichzeitig die weiter von der Auflagefläche entfernten Gewindegänge höher belastet. Dies gelingt dadurch, dass das Innengewinde eine kleinere Steigung aufweist als das Außengewinde, wodurch die Schraubenkraft zunächst in die der Auflagefläche abgewandte Seite der Gewindegänge eingeleitet wird. Mit wachsender Vorspannkraft werden auch die näher zur Auflagefläche liegenden Gewindegänge zunehmend an der Kraftübertragung beteiligt. Daraus resultiert eine insgesamt gleichmäßigere Lastverteilung der gepaarten Gewindegänge.

Um die Umformung des rohrförmigen Endabschnitts zu erleichtern, ist bevorzugt vorgesehen, dass die erste Komponente am Übergang zum rohrförmigen Endabschnitt an seiner Außenseite eine in Umfangsrichtung verlaufende Materialverjüngung aufweist.

Eine besonders vorteilhafte Anwendung der Erfindung betrifft eine Ausbildung, bei der die erste Komponente ein integrierter Hochdruckspeicher eines modularen Common Rail Injektors und die zweite Komponente ein Haltekörper des modularen Common Rail Injektors ist.

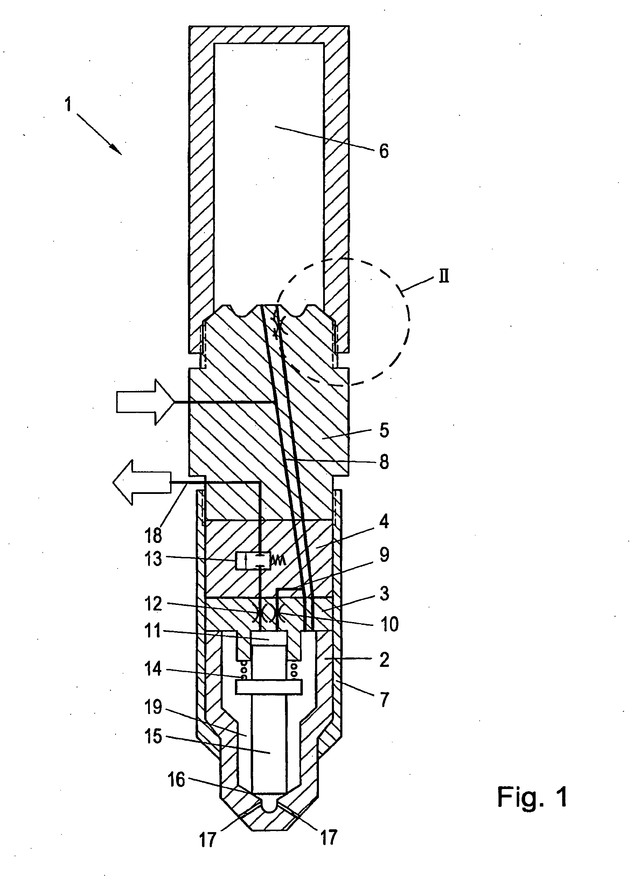

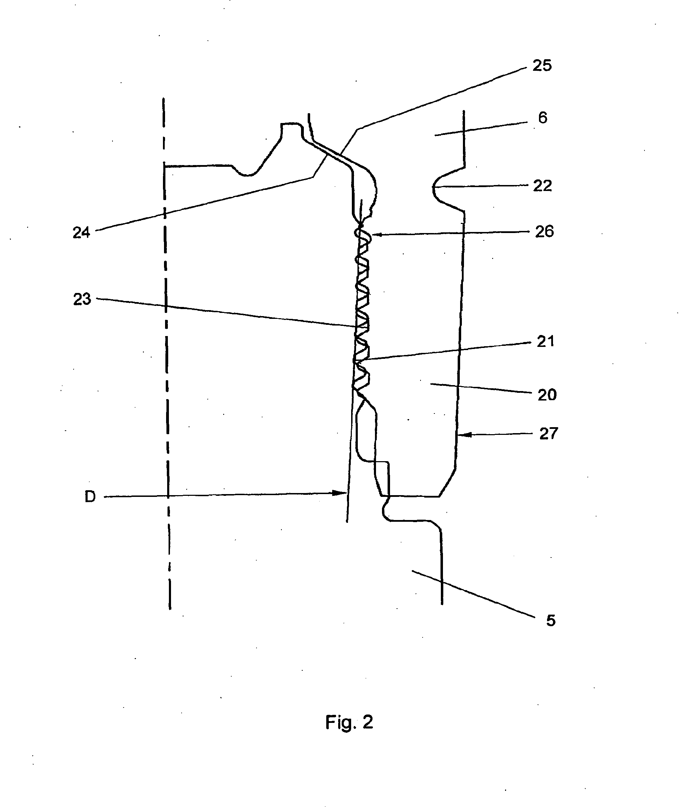

Die Erfindung wird nachfolgend anhand eines in der Zeichnung schematisch dargestellten Ausführungsbeispiels erläutert. In dieser zeigt Fig. 1 den grundsätzlichen Aufbau eines modularen Common Rail Injektors und Fig. 2 eine Detaildarstellung der Gewindeverbindung des Haltekörpers mit dem Hochdruckspeicher.

In Fig. 1 ist ein Injektor 1 dargestellt, der eine Einspritzdüse 2, eine Drosselplatte 3, eine Ventilplatte 4, einen Haltekörper 5 und einen Hochdruckspeicher 6 aufweist, wobei eine mit dem Haltekörper 5 verschraubte Düsenspannmutter 7 die Einspritzdüse 2, die Drosselplatte 3 und die Ventilplatte 4 zusammenhält. Im Ruhezustand ist das Magnetventil 13 geschlossen, sodass Hochdruckkraftstoff aus dem Hochdruckspeicher 6 über die Hochdruckleitung 8, die Querverbindung 9 und die Zulaufdrossel 10 in den Steuerraum 11 der Einspritzdüse 2 strömt, der Abfluss aus dem Steuerraum 11 über die Ablaufdrossel 12 aber am Ventilsitz des Magnetventils 13 blockiert ist. Der im Steuerraum 11 anliegende Systemdruck drückt gemeinsam mit der Kraft der Düsenfeder 14 die Düsennadel 15 in den Düsennadelsitz 16, sodass die Spritzlöcher 17 verschlossen sind. Wird das Magnetventil 13 betätigt, gibt es den Durchfluss über den Magnetventilsitz frei, und Kraftstoff strömt aus dem Steuerraum 11 durch die Ablaufdrossel 12, den Magnetventilankerraum und die Niederdruckbohrung 18 zurück in den nicht dargestellten Kraftstofftank. Es stellt sich ein durch die Strömungsquerschnitte von Zulaufdrossel 10 und Ablaufdrossel 12 definierter Gleichgewichtsdruck im Steuerraum 11 ein, der so gering ist, dass der im Düsenraum 19 anliegende Systemdruck die im Düsenkörper längs verschieblich geführte Düsennadel 15 zu öffnen vermag, sodass die Spritzlöcher 17 freigegeben werden und eine Einspritzung erfolgt.

Sobald das Magnetventil 13 geschlossen wird, wird der Ablaufweg des Kraftstoffes durch die Ablaufdrossel 12 gesperrt. Über die Zulaufdrossel 10 wird im Steuerraum 11 wieder Kraftstoffdruck aufgebaut und eine zusätzliche Schließkraft erzeugt, welche die hydraulische Kraft auf die Druckschulter der Düsennadel 15 vermindert und die Kraft der Düsenfeder 14 übersteigt. Die Düsennadel 15 verschließt den Weg zu den Einspritzöffnungen 17, wobei der Einspritzvorgang beendet wird.

Einspritzinjektoren dieser Art werden in modularen Common-Rail-Systemen verwendet, die dadurch gekennzeichnet sind, dass ein Teil des im System vorhandenen Speichervolumens im Injektor selbst vorhanden ist. Modulare Common-Rail-Systeme kommen bei besonders großen Motoren zum Einsatz, bei welchen die einzelnen Injektoren unter Umständen in erheblichem Abstand voneinander angebracht sind. Die alleinige Verwendung eines gemeinsamen Rails für alle Injektoren ist bei solchen Motoren nicht sinnvoll, da es aufgrund der langen Leitungen während der Einspritzung zu einem massiven Einbruch im Einspritzdruck kommen würde, sodass bei längerer Spritzdauer die Einspritzrate merklich einbrechen würde. Bei solchen Motoren ist es daher vorgesehen, einen Hochdruckspeicher im Inneren eines jeden Injektors anzuordnen. Eine solche Bauweise wird als modularer Aufbau bezeichnet, da jeder einzelne Injektor über seinen eigenen Hochdruckspeicher verfügt und somit als eigenständiges Modul eingesetzt werden kann. Unter einem Hochdruckspeicher ist hierbei nicht eine gewöhnliche Leitung zu verstehen, sondern es handelt sich bei einem Hochdruckspeicher um ein druckfestes Gefäß mit einer Zu- bzw. Ableitung, dessen Durchmesser im Vergleich zu den Hochdruckleitungen deutlich vergrößert ist, damit aus dem Hochdruckspeicher eine gewisse Einspritzmenge abgegeben werden kann, ohne dass es zu einem sofortigen Druckabfall kommt.

Fig. 2 zeigt eine vergrößerte Darstellung des Details II der Fig. 1. Der Hochdruckspeicher 6 weist einen rohrförmigen Endabschnitt 20 auf, der mit einem Innengewinde 21 versehen ist. Am Übergang zum rohrförmigen Endabschnitt 20 weist der Hochruckspeicher 6 eine in Umfangsrichtung verlaufende Materialverjüngung 22 auf, die z.B. als Umfangsnut ausgebildet ist. Der Haltekörper 5 ist mit einem Außengewinde 23 versehen, das im in den Hochdruckspeicher 6 eingeschraubten Zustand des Haltekörpers 5 mit dem Innengewinde 21 zusammenwirkt. Beim Festziehen der Schraubverbindung wird die konische Stirnfläche 24 des Haltekörpers 5 gegen die konische Auflagefläche 25 des Hochdruckspeichers 6 gespannt, wodurch eine Abdichtung zwischen Hochdruckspeicher 6 und Haltekörper 5 erzielt wird. Im verspannten Zustand wird der erste Gewindegang 26 bei herkömmlichen Ausführungen der Gewindeverbindung am höchsten belastet.

Erfindungsgemäß wird nun im Bereich des Innengewindes 21 eine radiale Presskraft 27 von außen aufgebracht, die zu einer plastischen Deformation des rohrförmigen Endabschnitts 20 führt. Es entsteht eine durch Vorprägung vorgespannte und vorverformte Gewindegeometrie. Die radiale Presskraft 27 wird beispielsweise durch Rollieren aufgebracht. Insbesondere ist hierdurch eine linear nach unten ansteigende Verformung des Gewindes zu beobachten, sodass ein sich in Richtung zum freien Ende hin insbesondere kontinuierlich verringernder Innendurchmesser D des Innengewindes 21 erzeugt wird. Die Gewindesteigung des Innengewindes 21 wird dadurch im Vergleich zur Steigung des Außengewindes 23 verringert, sodass beim Verspannen der Gewinde der erste tragende Gewindegang 26 entlastet wird.

Die Deformation ist in Fig. 2 10-fach überhöht dargestellt.

## Patentansprüche

1. Verfahren zur Beeinflussung der Gewindegeometrie eines Innengewindes einer für das Führen von Hochdruckmedium vorgesehenen ersten Komponente einer Einspritzvorrichtung für Brennkraftmaschinen, wobei das Innengewinde an einem rohrförmigen Endabschnitt der ersten Komponente ausgebildet ist, in welches eine zweite Komponente einschraubbar und gegen eine Auflagefläche der ersten Komponente spannbar ist, **dadurch gekennzeichnet, dass** der rohrförmige Endabschnitt an der Außenseite mit einer eine plastische Verformung erlaubenden radialen Druckkraft beaufschlagt wird, wodurch der rohrförmige Endabschnitt derart umgeformt wird, dass das Innengewinde (21) einen sich in Richtung zum freien Ende hin kontinuierlich verringernden Innendurchmesser (D) erhält.

2. Verfahren nach Anspruch 1, **dadurch gekennzeichnet, dass** die erste Komponente (6) ein integrierter Hochdruckspeicher eines modularen Common Rail Injektors und die zweite Komponente (5) ein Haltekörper des modularen Common Rail Injektors ist.

3. Gewindeverbindung von Hochdruckmedium führenden Komponenten einer Einspritzvorrichtung für Brennkraftmaschinen, umfassend eine erste Komponente und eine zweite Komponente, wobei die erste Komponente an einem rohrförmigen Endabschnitt ein Innengewinde und die zweite Komponente ein in das Innengewinde einschraubbares Außengewinde aufweist, wobei die zweite Komponente bei Festziehen der Gewindeverbindung mit einer Stirnfläche gegen eine Auflagefläche der ersten Komponente spannbar ist, **dadurch gekennzeichnet, dass** die erste Komponente (6) durch Druckumformung derart bearbeitet ist, dass das Innengewinde (21) einen sich in Richtung zum freien Ende hin kontinuierlich verringernden Innendurchmesser (D) aufweist.

4. Gewindeverbindung nach Anspruch 3, **dadurch gekennzeichnet, dass** die erste Komponente (6) am Übergang zum rohrförmigen Endabschnitt (20) an seiner Außenseite eine in Umfangsrichtung verlaufende Materialverjüngung (22) aufweist.

5. Gewindeverbindung nach Anspruch 3 oder 4, **dadurch gekennzeichnet, dass** die erste Komponente (6) ein integrierter Hochdruckspeicher eines modularen Common Rail Injektors und die zweite Komponente (5) ein Haltekörper des modularen Common Rail Injektors ist.

## Claims

1. Method for influencing the thread geometry of an internal thread of a first component, provided for conducting high-pressure medium, of an injection device for internal combustion engines, wherein the internal thread is formed on a tubular end section of the first component, into which internal thread a second component can be screwed and braced against an abutment surface of the first component, **characterized in that** the tubular end section is subjected, on the outer side, to a radial pressure force that permits a plastic deformation, whereby the tubular end section is deformed such that the internal thread (21) has imparted to it an internal diameter (D) which decreases continuously in the direction of the free end.

2. Method according to Claim 1, **characterized in that** the first component (6) is an integrated high-pressure accumulator of a modular common-rail injector, and the second component (5) is a holding body of the modular common-rail injector.

3. Threaded connection of components, which conduct high-pressure medium, of an injection device for internal combustion engines, comprising a first component and a second component, wherein the first component has an internal thread on a tubular end section and the second component has an external thread that can be screwed into the internal thread, wherein, when the threaded connection is tightened, the second component can be braced by way of a face surface against an abutment surface of the first component, **characterized in that** the first component (6) is worked by pressure deformation such that the internal thread (21) has an internal diameter (D) which decreases continuously in the direction of the free end.

4. Threaded connection according to Claim 3, **characterized in that** the first component (6) has, on its outer side at the transition to the tubular end section (20), a material constriction (22) running in a circumferential direction.

5. Threaded connection according to Claim 3 or 4, **characterized in that** the first component (6) is an integrated high-pressure accumulator of a modular common-rail injector, and the second component (5) is a holding body of the modular common-rail injector.

## Revendications

1. Procédé destiné à influencer la géométrie de filetage d'un filetage intérieur d'un premier composant, prévu pour le guidage d'un fluide sous haute pression, d'un dispositif d'injection pour moteurs à combustion interne, le filetage intérieur étant réalisé sur une portion d'extrémité tubulaire du premier composant, dans laquelle un deuxième composant peut être vissé et serré contre une surface d'appui du premier composant, **caractérisé en ce que** la portion d'extrémité tubulaire est sollicitée, sur le côté extérieur, par une force de pression radiale autorisant une déformation plastique, de telle sorte que la portion d'extrémité tubulaire soit déformée de telle sorte que le filetage intérieur (21) présente un diamètre intérieur (D) se rétrécissant de manière continue en direction de l'extrémité libre.

2. Procédé selon la revendication 1, **caractérisé en ce que** le premier composant (6) est un accumulateur haute pression intégré d'un injecteur à rampe commune modulaire et le deuxième composant (5) est un corps de retenue de l'injecteur à rampe commune modulaire.

3. Liaison filetée de composants guidant un fluide sous haute pression d'un dispositif d'injection pour moteurs à combustion interne, comportant un premier composant et un deuxième composant, le premier composant présentant, au niveau d'une portion d'extrémité tubulaire, un filetage intérieur et le deuxième composant présentant un filetage extérieur pouvant être vissé dans le filetage intérieur, le deuxième composant pouvant, lors du serrage à fond de la liaison filetée, être serré par une surface frontale contre une surface d'appui du premier composant, **caractérisée en ce que** le premier composant (6) peut être façonné par déformation par pression de telle sorte que le filetage intérieur (21) présente un diamètre intérieur (D) se rétrécissant de manière continue en direction de l'extrémité libre.

4. Liaison filetée selon la revendication 3, **caractérisée en ce que** le premier composant (6) comprend, au niveau de la transition vers la portion d'extrémité tubulaire (20), sur son côté extérieur, un rétrécissement de matériau (22) s'étendant dans la direction périphérique.

5. Liaison filetée selon la revendication 3 ou 4, **caractérisée en ce que** le premier composant (6) est un accumulateur haute pression intégré d'un injecteur à rampe commune modulaire et le deuxième composant (5) est un corps de retenue de l'injecteur à rampe commune modulaire.
